# EUROPEAN PATENT APPLICATION

(11) **EP 4 772 439 A1**
(43) Date of publication of application: **08.07.2026**
(21) Application number: 25150098.9
(22) Date of filing: 02.01.2025
(51) Int. Cl.: B64D 11/06

(54) **PATIENT TRANSPORT COMPARTMENT FOR AN AIRPLANE**

(71) Applicant: Inflight ICU B.V., 1105 BP Amsterdam (NL)
(72) Inventor: van den Bosch, Job, 1105BP Amsterdam (NL)
(74) Representative: De Vries & Metman

(57) **Abstract**

Patient transport compartment (2) for use in a passenger cabin (1) of an airplane, the compartment having an aisle side (4) that is wider than the length of a stretcher, the aisle side comprising a wall section (5) and an entrance (6), that is in top view at an obtuse angle α with the wall section (5). The entrance (6) of the compartment (2), in particular its window (18), can be placed in a sight line (S) from a cabin crew seat (22).

## Description

The invention relates to a removable patient transport compartment for use in a passenger plane, e.g., for patients requiring intensive medical care or observance during a long-haul flight. In the compartment, the patients can lie on a stretcher isolated from other passengers and within reach of medical equipment, such as equipment for breathing support for respiratory failure. After one or more flights, the compartment can be disassembled and removed and stored for a next occasion.

Examples of such patient transport compartments are disclosed in US 2008/0250559 and US 2009/0302156. A stretcher can be placed in the compartment and the compartment can be provided with medical equipment.

To minimize the number of seats occupied by the compartment, the compartment should be as small as possible. Consequently, it requires considerable maneuvering to move a patient, e.g., on a stretcher, into the compartment, given the narrow aisles typically found in passenger cabins of airplanes. To guarantee privacy of the patient, the compartments are fully closed. This makes it difficult to observe the patient from outside, particularly during landing or takeoff when the cabin attendants are on their seats at a distance from the compartment, in accordance with safety requirements and guidelines of the EASA and FAA.

The object of the invention is to provide a compartment which overcomes at least one of these drawbacks.

The object of the invention is achieved with a patient transport compartment for use in a passenger cabin of an airplane, the compartment having an aisle side that is wider than the length of a stretcher, the aisle side comprising a wall section and an entrance, that is in top view at an angle with the wall section.

This configuration substantially simplifies the positioning of a stretcher with a patient, requiring less manoeuvring and effort, and makes optimized use of the available space. This also means that fewer aircraft seats need to be removed to allow for installation of the compartment and placement of the stretcher.

In use, the aisle side is positioned along an aisle with the wall section being substantially parallel to the aisle's main direction, the entrance chamfering the usually substantially rectangular lay-out of the compartment's interior. The angle that the entrance makes with the wall section is typically an obtuse angle less than 180 degrees at the interior side of the compartment, for example an angle in the range of 50 - 170 degrees.

The length of a stretcher is conform international industrial standards, in particular NEN-EN 1865, e.g., at least 2 meter, e.g., taking the place of three or more airplane seats placed one behind the other.

An additional advantage of placing the entrance at an angle is that existing aisle lighting system remains unobstructed, depending on the arrangement of the lighting system. This contributes to overall safety and usability during both emergency situations and routine operations. Maintaining the aisle lighting also avoids the need for additional lighting modifications, reducing installation complexity and cost.

In a specific embodiment, the entrance may comprise a door, e.g., provided with a window, so the compartment interior can be observed from outside, e.g., by a cabin attendant. Because the door is at an angle to the aisle and the seat rows, the patient is still largely shielded from view by other passengers. The door can for example be a folding door with one or more folding sections having a window.

In a specific embodiment, the window is an integral transparent part of the door, which makes it more resistant against pressure differences and vibrations.

The window may for example have an adjustable opacity. This way, the window can be kept opaque to increase privacy for the patient, while the window can be made transparent during landing or takeoff within sight of the cabin attendants. Adjustable opacity can for example be achieved with an electrochromic window.

The window may for example have a height corresponding to the level where the stretcher is to be placed, e.g., a level of at least 1,5 m between the floor and the lower edge of the window. This height helps to minimize view by seated co-passengers. Since this height corresponds to the level of most equipment in the compartment, it also contributes to a better acoustic insulation.

The wall panels and the door can have modular interfaces, allowing the compartment to be constructed in various configurations.

The design of the compartment can be modified to match with the type of airplane where it is to be used. For instance, the wall panels may have top edges profiled to follow the ceiling contour of the specific airplane and/or the angle of the entrance makes with the wall panels can be adjusted to the lay-out of the specific airplane type. More particularly, the compartment is preferably designed to fit in a rear corner at the last seat rows of the passenger cabin of a specific airplane type.

Aircraft ventilation systems in passenger cabins are designed to circulate air evenly across the cabin, avoiding obstructions in the cabin interior to optimize passenger comfort and efficient operation of HEPA filtration systems. To minimize or prevent disruption of these air flows, the compartment can be provided with smooth wall surfaces without protruding parts or abrupt shape transitions, e.g., with rounded corners. By providing the compartment with smooth surfaces and gradual shape transitions, the compartment optimally adapts to the aircraft's environmental control system.

The wall panels can for example be made of panel materials commonly used in airplane design, such as thermoformed sandwich panels, e.g., with a honeycomb core, e.g., of a flame retardant material.

Optionally, the wall panels and/or the door can be coated with an antimicrobial coating.

The wall panels can be fixed to the ground of the passenger cabin using conventional fasteners for fixation temporary walls medical units to airline floor rails, such as the fasteners of the US company QRP Inc, in particular QRP product QRPLH-252-200P.

The wall panels of the compartment can be fixed to each other by any suitable system. An example of a suitable modular wall construction system is disclosed in US 2007/0295862.

In the compartment, a medical unit can be placed typically comprising a stretcher. The medical unit can for example be a SA Module 5500-003L of Spectrum Aeromed, a PTU of Lufthansa Technik or any suitable alternative.

The medical unit may further comprise lockers or trolleys for medical equipment, oxygen and power supply, one or more monitors or displays, a fire extinguisher, etc.. To mount the equipment in a secure, clear and accessible manner, the compartment can be provided with medical equipment mounting points, e.g., at the interior side of the wall panels.

The compartment may further comprise one or more chairs, e.g., one for a nurse and a second one for a medical doctor. The two chairs are preferably side by side, to allow an easier entrance and exit. The one or more chairs can for example be mounted to an interior side of one or more wall panels.

If the compartment is to be used for medium care, a smaller build-up can be used, e.g., with space for only a single chair and possibly with less medical equipment.

The exterior side of the wall panels can for example be used to provide information to co-passengers, e.g., a display or a written notice explaining to them the purpose of the compartment and its use for transport of a patient in need for medical care. It has been found that passengers find it reassuring when they know what the compartment is for and what it is transporting.

The invention is further explained with reference to the accompanying drawings showing an exemplary embodiment.
Figure 1: shows an exemplary embodiment of a compartment according to the present invention;
Figure 2: shows in top view the position of the compartment in a passenger cabin of an airplane.

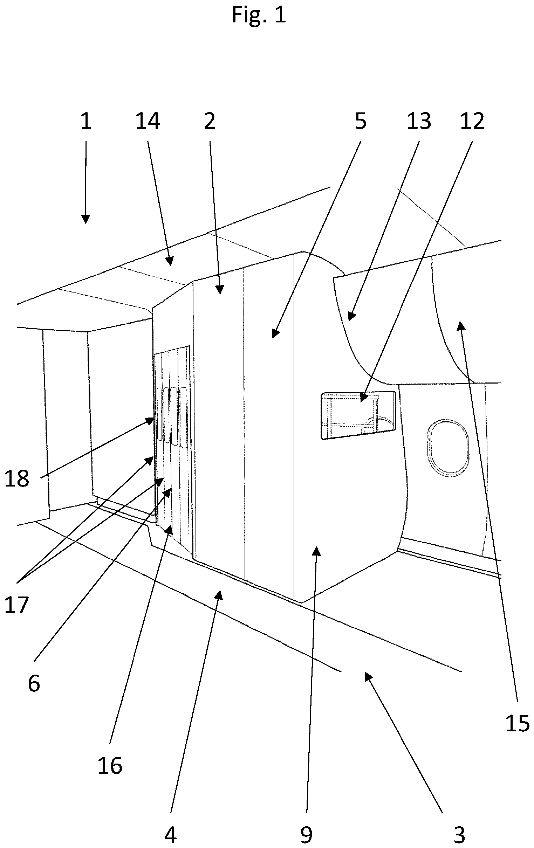

Figure 1 shows a section of a passenger cabin 1 of an airplane and a patient transport compartment 2 mounted in the passenger cabin 1 alongside an aisle 3. The compartment 2 has an aisle side 4 with a wall section 5 and an entrance 6.

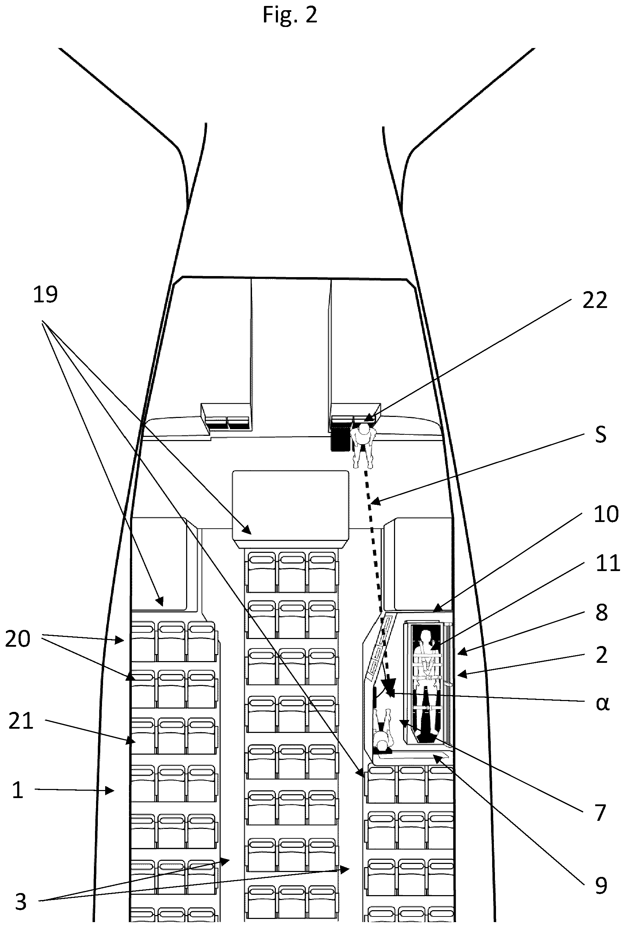

Figure 2 shows the patient transport compartment 2 in top view. The compartment 2 has an interior 7 enclosed by the aisle side 4, a long side 8 opposite to the aisle side 4, a broad side 9 between the wall section 5 and the long side 8, and a small side 10 between the entrance 6 and the long side 8. The aisle side 4 is wider than the length of a stretcher, allowing to position a stretcher 11 in the compartment 2 for supporting a patient to be transported.

At the interior side of the compartment 2, the entrance 6 makes an obtuse angle α with the wall section 5. This makes it possible to place the stretcher 11 in the compartment 2 without much manoeuvring, with as little stress as possible for the patient or the accompanying medical staff.

In the shown embodiment, the long side 8 is formed by the interior wall at the window side of the passenger cabin 1. In an alternative embodiment, the long side 8 may be formed by one or more wall panels, e.g., if the compartment 2 is placed in a more central part of the passenger cabin 1.

The compartment 2 has a modular set up. The wall section 5 of the aisle side 4 is made of two wall panels 5A, 5B. The broad side 9 is made of a single wall panel and is provided with an integral window 12. Also the small side 10 is formed by a single wall panel. The wall panels and the entrance 6 have top edges 13 shaped to adjoin the contour of the ceiling 14 and the luggage compartments 15 of the passenger cabin 1.

In the shown embodiment, the entrance 6 comprises a foldable door 16 with four door sections 17 which can be folded to provide access to the compartment 2. Alternatively, other door types can be used or a curtain can be used in stead of a door. Each folding section 17 is provided with an integral electrochromic window section 18.

The compartment 2 is positioned at a rear side of the passenger cabin 1. At this position, the compartment 2 is out of sight for most co-passengers and close to the exit and the cabin crew seats 22. In the drawing, showing an exemplary configuration of a passenger cabin, the passenger cabin 1 has three parallel seat clusters 19 of seat rows 20, each seat row having three seats 21. The seat clusters 19 extend in the longitudinal direction of the passenger cabin 1 and are separated by the aisles 3. The compartment 2 takes the place of the last three rows of three seats at the left window side of the passenger cabin 1.

In the back of passenger cabin 1 there are two seats 22 for the cabin crew. From these seats 22 the cabin crew can monitor the aisle 3 during take-off or landing. Since the entrance 6 of the compartment 2 is at an angle α with the aisle 3 there is a direct sight line S from the nearest cabin crew seat 22 via the entrance windows 18 to the interior 7 of the compartment 2, enabling a flight intendant to monitor the situation in the compartment 2, in line with the applicable safety requirements.

The design of the compartment 2 can be adjusted for other airplane types, seat row configurations or other positions in the passenger cabin.

The disclosure is not restricted to the above described embodiments which can be varied in a number of ways within the scope of the claims. For instance, the design of the compartment can be adjusted to the interior lay-out of any airplane type for which it is to be used.

## Claims

1. Patient transport compartment (2) for use in a passenger cabin (1) of an airplane, the compartment having an aisle side (4) that is wider than the length of a stretcher, the aisle side comprising a wall section (5) and an entrance (6), that is in top view at an obtuse angle α with the wall section (5).

2. Compartment according to claim 1, wherein the entrance (6) comprises a door (16), in particular a folding or sliding door, provided with one or more windows (18).

3. Compartment according to claim 2, wherein at least one of the one or more windows (18) is an integral transparent part of the door (16).

4. Compartment according to claim 2 or 3, wherein at least one of the one or more windows (18) has an adjustable opacity.

5. Compartment according to claim 4, wherein at least one of the one or more windows (18) is an electrochromic window.

6. Compartment according to any one of claims 2 - 5, wherein the one or more windows (18) have a height of at least 1,5 m.

7. Compartment according to any one of the preceding claims, further comprising wall panels, the wall panels and the door having modular interfaces, allowing the compartment to be constructed in various configurations.

8. Compartment according to any one of the preceding claims wherein the wall panels and/or the door (16), e.g., the one or more windows (18), are provided with an antimicrobial coating.

9. Compartment according to any one of the preceding claims, wherein the wall panels and/or the door at least partly comprise composite panels comprising a honeycomb core.

10. Compartment according to any one of the preceding claims, further comprising rail-mountable fasteners.

11. Compartment according to any one of the preceding claims, further comprising shock absorbers, e.g., in one or more of the walls and/or in the fasteners.

12. Compartment according to any one of the preceding claims, wherein the wall panels have top edges (13) shaped to match the contour of the passenger cabin ceiling (14) and/or luggage compartments (15).

13. Compartment according to any one of the preceding claims, further comprising connection points for connection to the power network of the passenger cabin.

14. Method of positioning a patient transport compartment according to any one of the preceding claims in an airplane, wherein the entrance (6) of the compartment (2), in particular the one or more windows (18), is placed in a sight line (S) from a cabin crew seat (22).
